# EUROPÄISCHE PATENTANMELDUNG

(11) **EP 1 125 619 A1**
(43) Veröffentlichungstag der Anmeldung: **22.08.2001**
(21) Anmeldenummer: 00810132.1
(22) Anmeldetag: 17.02.2000
(51) Int. Cl.: B01D 3/08, B01L 3/00, F16L 27/08

(54) **Dampfdurchführungssystem für einen Rotationsverdampfer und Rotationsverdampfer**

(71) Anmelder: Büchi Labortechnik AG, CH-9230 Flawil (CH)
(72) Erfinder: SPRING, Arthur, 9230 FLAWIL (CH)
(74) Vertreter: Hepp, Dieter

(57) **Zusammenfassung**

Ein Dampfdurchführungssystem für einen Rotationsverdampfer mit einem drehbaren Verdampfergefäss (5) und einem stationären Kühler (7) besteht aus einem Dampfdurchführungsrohr (6) und einem Anschlussstück (8). Das Dampfdurchführungsrohr (6) wird kühlerseitig in einer feststehenden Dichtung (9) gelagert. Am verdampferseitigen Ende ist das Dampfdurchführungsrohr (6) derart mit dem Anschlusstück (8) verbunden, dass die Achse (A) des Dampfdurchführungsrohrs (6) bezüglich der Achse (A') des Anschlussstücks (8) bewegbar ist.

## Beschreibung

Die Erfindung betrifft ein Dampfdurchführungssystem für einen Rotationsverdampfer und einen Rotationsverdampfer mit den Merkmalen des Oberbegriffs der unabhängigen Patentansprüche.

Derartige Dampfdurchführungssysteme sind bereits bekannt. Dabei wird ein mit dem Verdampferkolben verbundenes Dampfdurchführungssystem durch ein dieses umfassendes Antriebsteil angetrieben und über eine Dichtung in oder an einen statischen Kühler geführt. Die Dichtungen werden dabei aufgrund der Rotation mechanisch beansprucht und müssen, um Funktion und Betriebssicherheit zu gewährleisten, regelmässig ersetzt werden.

EP 504 099 zeigt ein mindestens zweiteiliges Dampfdurchführungsrohr, bei dem die Stirnseiten sowohl des statischen wie auch des mit dem Antriebsteil in Kontakt stehenden, drehbaren Teils als Dichtflächen ausgebildet sind, wobei möglichst verschleissarme, resistente Materialien wie Kunststoffwerkstoffe mit Keramik- oder Glaswerkstoffen kombiniert werden.

Ein Nachteil der bekannten Dampfdurchführungssysteme besteht darin, dass das drehbare Dampfdurchführungsrohr in direktem Kontakt mit dem Antriebsteil steht. Bei nicht genau konzentrischer Bewegung des Antriebsteils wirken exzentrische Kräfte direkt auf das Dampfdurchführungsrohr und führen zu mechanischer Beanspruchung der Dichtungen.

DE 15 19 744 zeigt ein mit einem Antriebsteil verbundenes Dampfdurchführungsrohr, mit einer Dichtung, die durch die radiale Ausdehnung eines Flansches fest gehalten aber radial ausgleichend zwischen den Dichtflächen von Kühler und Antriebsteil gehalten wird. Die dadurch entstehende radiale Gleitbewegung führt zu einer entsprechenden mechanischen Beanspruchung.

Aufgabe der Erfindung ist es, die Nachteile des Bekannten zu vermeiden, insbesondere also ein Dampfdurchführungssystem und einen Rotationsverdampfer zu schaffen, bei dem exzentrische Kräfte auf die Dichtungen minimiert und die Verschleissfestigkeit erhöht ist.

Erfindungsgemäss wird diese Aufgabe mit einem Dampfdurchführungssystem und mit einem Rotationsverdamfer gemäss den kennzeichnenden Merkmalen der unabhängigen Patentansprüche gelöst.

Durch die Unterteilung der Dampfdurchführung in ein mit dem Antriebsteil antreibbares und mit dem Verdampfergefäss verbundenes oder verbindbares Anschlussstück und in ein in einer bezüglich einem Kühler feststehenden Dichtung drehbar gelagertes Dampfdurchführungsrohr, wird erreicht, dass durch das Antriebsteil entstehende Kräfte vorwiegend am Anschlussstück und gegebenenfalls nur am verdampferseitigen Ende des Dampfdurchführungsrohrs angreifen. Die Übertragung von exzentrischen Kräften vom mit dem Antriebsteil in Verbindung stehenden Anschlussstück auf die bezüglich dem Kühler feststehende Dichtung wird dadurch minimiert, dass das Dampfdurchführungsrohr derart mit dem Anschlussstück verbunden ist, dass seine Achse bezüglich der Achse des Anschlussstücks beweglich ist. Das Dampfdurchführungsrohr wird im Bezug auf die feststehende Dichtung gewissermassen vom Antriebsstück entkoppelt.

Besonders vorteilhaft ist es, wenn die feststehende Dichtung an der Aussenwand des Dampfdurchführungsrohrs dichtend anliegt und in einer solchen Art und einem Material gefertigt wurde, dass sie sich unter Wärme- und Chemieeinwirkung in Form und Vorspannung nicht verändert. Dieses modifizierte Material, bspw. PTFE, erlaubt, dass die feststehende Dichtung auch während des Betriebs jederzeit optimal am Dampfdurchführungsrohr anliegt. Die Unabhängigkeit des Dampfdurchführungsrohrs am verdampferseitigen Ende von einer Exzenterbewegung des Antriebsteils erlaubt den Einsatz solcher Materialien in der feststehenden Dichtung, da diese auch bei exzentrischen Bewegungen des Antriebsteils nur minimal mechanisch beansprucht wird.

Eine feststehende Dichtung aus einem inerten, gleitmodifizierten Kunststoff, insbesondere PTFE, ist dafür besonders geeignet. Durch die Rückstelleigenschaften dieses PTFE's ist die reversible Verformbarkeit gewährleistet. Zudem ist PTFE chemisch beständig gegenüber lösungsmittelhaltigen Dämpfen und gleitmodifizierbar, wodurch die mechanische Beanspruchung durch Reibung minimiert werden kann.

Selbstverständlich sind auch andere Materialien mit entsprechenden Eigenschaften denkbar.

Besonders vorteilhaft ist es, wenn die Dichtung in einem Grundkörper aus einem inerten Kunststoff, insbesondere PTFE, gehalten ist.

Eine Lagerung der feststehenden Dichtung in einem Grundkörper aus einem inerten Kunststoff weist mehrere Vorteile auf. Der Grundkörper kann ebenfalls dichtende Funktionen übernehmen. Insbesondere kann die kühlerseitige Stirnseite des Grundkörpers so angeordnet werden, dass sie dichtend an einem kühlerseitigen Anschlussstück anliegt.

Als besonders geeignet erweist sich ein Grundkörper aus einem inerten Kunststoff, insbesondere PTFE, weil verschiedene Bereiche des Grundkörpers direkt den lösungsmittelhaltigen Dämpfen exponiert sein können.

Gemäss einem bevorzugten Ausführungsbeispiel ist eine Ausbildung der feststehenden Dichtung als Ringkörper mit einer verformbaren Lippe besonders günstig. Die verformbare Lippe übernimmt dabei die Dichtefunktion und der Ringkörper wirkt stabilisierend.

Zusätzliche Stabilität der feststehenden Dichtung wird erzielt, durch einen ersten Ring, insbesondere einen Stahlring, am äusseren Umfang des Grundkörpers und/oder einen zweiten Ring, insbesondere einen Stahlring, in der Dichtung. Denkbar sind auch andere Materialien als Stahl, welche genügend stabilisieren.

Das Dampfdurchführungsrohr kann am verdampferseitigen Ende in einer Dichtung gelagert werden, so dass die Aussenwand des Dampfdurchführungsrohrs dichtend an der Innenseite der Dichtung anliegt.

Besonders geeignet ist eine verdampferseitige Dichtung, die im Querschnitt V-förmig ausgebildet ist. Innen- und Aussenschenkel einer solchen Dichtung können als Dichtflächen ausgebildet sein.

Besonders vorteilhaft ist, wenn die verdampferseitige Dichtung auf Ihrer Aussenseite eine Kugelfläche und das Anschlussstück einen Kegelschliff aufweist, wobei die Kugelfläche der Dichtung unter Ausbildung eines Kugelgelenkes dichtend im Kegelschliff des Anschlussstückes liegt. Das Kugelgelenk ermöglicht auf besonders einfache Weise eine Bewegbarkeit der verdampferseitigen Dichtung zum Anschlussstück und damit ein Ausgleich einer Exzenterbewegung des Anschlussstückes am verdampferseitigen Ende des Dampfdurchführungsrohrs. Exzentrische Kräfte die am mit dem Antriebsteil in Verbindung stehenden Anschlussstück auftreten, werden dadurch besonders wirksam ausgeglichen. Denkbar ist auch eine kinematische Umkehr, so dass das Dampfdurchführungsrohr über einen Kegelschliff an der Aussenseite der verdampferseitigen Dichtung anliegt und das Anschlussstück eine Kegelfläche aufweist, die mit der Innenseite der Dichtung in Kontakt steht.

Besonders bewährt hat es sich, wenn die verdampferseitige Dichtung aus einem inerten Kunststoff, insbesondere PTFE, besteht, weil dieses Material die nötige thermische Beständigkeit und Lösungsmittelbeständigkeit aufweist. Denkbar sind aber auch alle anderen Materialien, die die erwähnten Eigenschaften aufweisen.

Ein O-Ring innerhalb der verdampferseitigen Dichtung kann besonders vorteilhaft für die Stabilität der Dichtungsanordnung sein. Besonders geeignet ist ein Gummiring, weil er die nötige Elastizität aufweist um radiale Kräfte im Kugelgelenk abzudämpfen.

Durch eine Fixierung in axialer Richtung am verdampferseitigen Ende des Dampfdurchführungsrohrs kann ein Verschieben des Dampfdurchführungsrohrs in axialer Richtung, insbesondere bei Manipulationen am Gerät, verhindert werden. Besonders einfach lässt sich die Fixierung verwirklichen, wenn das Dampfdurchführungsrohr einen Flansch aufweist, der an einem Rückhalteelement am Antriebsteil, z. B. in einer Nut mit O-Ring, einrastbar ist. Denkbar sind aber auch andere Realisierungsformen der Fixierung in axialer Richtung.

Die Erfindung ist im folgenden in Ausführungsbeispielen anhand der Zeichnungen näher erläutert. Es zeigen:
- Figur 1: eine perspektivische Darstellung eines Rotationsverdampfers,
- Figur 2: einen Längsschnitt durch ein Ausführungsbeispiel eines Dampfdurchführungssystems mit den Merkmalen der Erfindung
- Figur 3: eine vergrösserte Darstellung der kühlerseitigen Dichtung gemäss Fig. 2 und
- Figur 4: eine vergrösserte Darstellung der verdampferseitigen Dichtung gemäss Fig. 2.

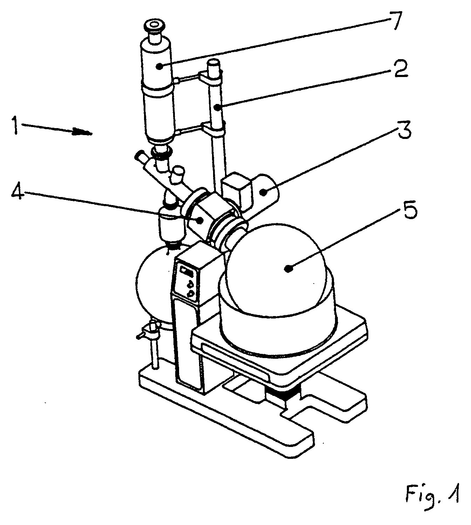

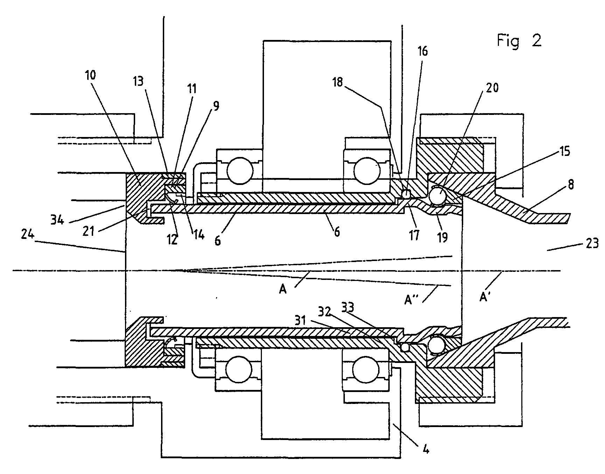

Figur 1 zeigt einen Rotationsverdampfer 1 mit einem Stativ 2, auf welchem ein Motor 3 befestigt ist, der über ein Antriebsteil 4 ein Verdampfergefäss 5 antreibt. Durch das Antriebsteil 4 verläuft als Dampfdurchführungsanordnung ein Dampfdurchführungsrohr 6 (Figur 2), durch welches der vom Verdampfergefäss 5 aufsteigende Dampf in einen Kühler 7 geleitet wird. Der Kühler 7 ist dabei in bekannter Weise stationär befestigt.

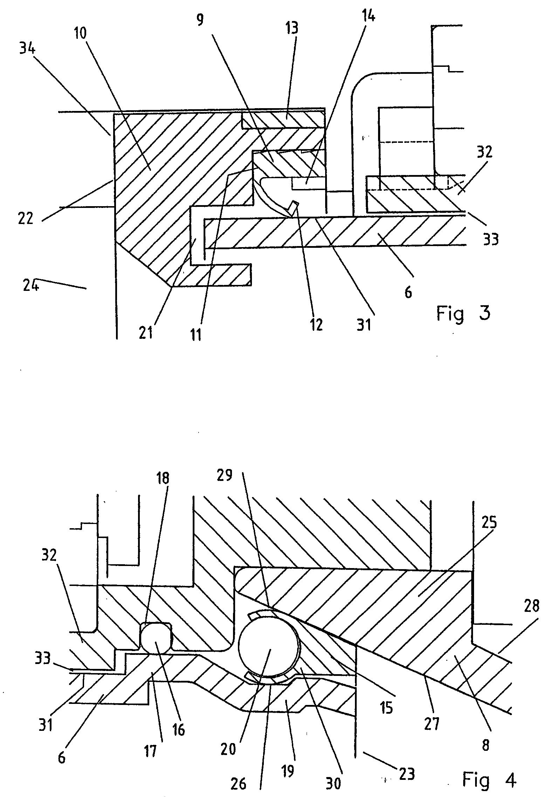

Figur 2 zeigt die Anordnung des Dampfdurchführungssystems. Am verdampferseitigen Ende 23 befindet sich ein Anschlussstück 8, das in bekannter Weise mit einem Verdampfergefäss 5 verbunden ist. Am Antriebsteil 4 zugewandten Ende liegt das Anschlussstück 8 mit seiner Innenfläche 27, die als Kegelschliff 25 ausgebildet ist, an den Aussenschenkeln 29 einer im Querschnitt V-förmig ausgebildeten Dichtung 15 (siehe Fig. 4)an. Die Aussenfläche 28 des Anschlussstücks 8 ist mit dem Antriebsteil 4 in Kontakt, so dass das Anschlussstück 8 drehbar ist.
Das Dampfdurchführungsrohr 6 wird durch das Antriebsteil 4 hindurchgeführt. Am verdampferseitigen Ende 23 weist das Dampfdurchführungsrohr 6 eine Nut 19 auf, in welche die im Querschnitt V-förmige Dichtung 15 eingerastet werden kann, so dass das Dampfdurchführungsrohr 6 mit den Innenschenkeln 30 der Dichtung 15 dichtend in Verbindung steht. Die V-förmige Dichtung 15 weist eine Kugelfläche 26 auf, so dass das Dampfdurchführungsrohr 6 mit Dichtung 15 und Anschlussstück 8 in der Art eines Kugelgelenks verbunden ist, welches durch Kräfte in axialer Richtung zusammengehalten wird (siehe Fig. 4). Durch den mit einer solchen Anordnung resultierenden Kraftschluss wird erreicht, dass das Dampfdurchführungsrohr 6 durch das mit dem Antriebsteil 4 in Verbindung stehende Anschlussstück 8 in eine Rotationbewegung versetzt wird.

Zusätzlich besitzt das Dampfdurchführungsrohr 6 am verdampferseitigen Ende 23 einen Flansch 17, welcher in einer Vertiefung 18 des Antriebsteils 4 einrastbar ist. In die Vertiefung 18 ist ein Ring 16 eingesetzt. Dadurch wird eine Fixierung des Dampfdurchführungsrohrs 6 in axialer Richtung gewährleistet.
Das Dampfdurchführungsrohr 6 wird vom verdampferseitigen Ende 23 durch das Antriebsteil 4 hindurch in eine feststehende Dichtung 9 am kühlerseitigen Ende 24 geführt, ohne dass das Dampfdurchführungsrohr 6 dabei in direktem Kontakt mit dem Antriebsteil 4 steht. Durch diese Anordnung wird erreicht, dass das Dampfdurchführungsrohr 6 relativ bewegbar ist bezüglich der Achse A des Antriebsteils 4. Exzentrische Kräfte die über das Anschlussstück 8 auf das Dampfdurchführungsrohr 6 übertragen werden, können so durch eine Bewegung, in der Fig. 2 dargestellt als Position A'', ausgeglichen und von der feststehenden Dichtung 9 ferngehalten werden. Zwischen der Aussenwand 31 und der Innenfläche 32 des Antriebsteils 4 ist ein Ringspalt 33 vorgesehen, der diese Ausgleichsbewegung erlaubt.

Figur 3 zeigt die kühlerseitige, feststehende Dichtung 9. Diese liegt dichtend an der Aussenwand 31 des Dampfdurchführungsrohrs 6 an und ist unter Wärmeeinwirkung reversibel verformbar. Die eigentliche Dichtfunktion wird dabei von einer verformbaren Lippe 12 übernommen, während ein Ringkörper 11 der feststehenden Dichtung 9 zur Halterung dient. Besonders bewährt hat sich eine feststehende Dichtung 9 aus einem inerten gleitmodifizierten Kunststoff, insbesondere PTFE, welcher über die nötigen Rückstelleigenschaften verfügt. Die feststehende Dichtung 9 wird durch einen Grundkörper 10 gehalten und durch einen ersten Ring 13 am äusseren Umfang und einen zweiten Ring 14 im Inneren der feststehenden Dichtung 9 stabilisiert. Der Grundkörper 10 weist eine umlaufende Vertiefung 21 auf, in welcher das Dampfdurchführungsrohr 6 eingesetzt ist. Der Grundkörper 10 besitzt eine Stirnseite 22, welche an einer Dichtfläche 34 des Kühlers anliegt. Durch die in Figur 3 gezeigte Anordnung sind Teile des Grundkörpers 10 direkt mit den lösungsmittelhaltigen Dämpfen in Kontakt. Besonders geeignet ist deshalb ein Grundkörper 10, aus einem inerten Kunststoff, insbesondere PTFE. Die in Figur 3 gezeigte Ausführung des Grundkörpers 10 wirkt zusätzlich dichtend gegenüber kühlerseitigem Rückfluss. Für das Dampfdurchführungsrohr 6 und das kühlerseitge Anschlussstück eignet sich Glas besonders gut.

Zwischen dem kühlerseitigen Anschlussstück und dem Grundkörper 10 der Dichtung 9 findet keine Rotation statt. Das Dampfdurchführungsrohr 6 ist hingegen bezüglich der Dichtung 9 drehbar.

Fig. 4 zeigt die verdampferseitige Dichtung 15, deren Aussenschenkel 29 dichtend an der als Kegelschliff 25 ausgebildeten Innenfläche 27 des Anschlussstück 8 anliegen. Die Innenschenkel 30 der Dichtung 15 liegen dichtend an der Aussenfläche 31 des Dampfdurchführungsrohrs 6 an. Die Dichtung 15 kann durch einen O-Ring 20 zusätzlich stabilisiert werden.

## Patentansprüche

1. Dampfdurchführungssystem für einen Rotationsverdampfer (1) mit einem drehbaren Verdampfergefäss (5) und einem stationären Kühler (7),
mit einer Dampfdurchführung, die das Verdampfergefäss (5) mit dem Kühler (7) verbindet und mit einem Antriebsteil (4) zum Drehen des Verdampfergefässes (5),
dadurch gekennzeichnet, dass die Dampfdurchführung ein mit dem Antriebsteil (4) antreibbares, mit dem Verdampfergefäss (5) verbundenes oder verbindbares Anschlussstück (8) sowie ein Dampfdurchführungsrohr (6) aufweist, wobei das Dampfdurchführungsrohr (6) an seinem kühlerseitigen Ende (24) in einer bezüglich dem Kühler (7) feststehenden Dichtung (9) gelagert ist und das Dampfdurchführungsrohr (6) derart mit dem Anschlussstück (8) verbunden ist, dass die Achse (A) des Dampfdurchführungsrohrs (6) bezüglich der Achse (A') des Anschlussstücks (8) bewegbar ist.

2. Dampfdurchführungssystem nach Anspruch 1, dadurch gekennzeichnet, dass die Dichtung (9) an der Aussenwand (31) des Dampfdurchführungsrohrs (6) dichtend anliegt und unter Wärmeeinwirkung reversibel verformbar ist.

3. Dampfdurchführungssystem nach einem der Ansprüche 1 oder 2, dadurch gekennzeichnet, dass die Dichtung (9) aus einem inerten, gleitmodifizierten Kunststoff, insbesondere PTFE, besteht.

4. Dampfdurchführungssystem nach einem der Ansprüche 1 bis 3, dadurch gekennzeichnet, dass die Dichtung (9) in einem Grundkörper (10) aus einem inerten Kunststoff, insbesondere PTFE, gehalten ist.

5. Dampfdurchführungssystem nach Anspruch 4, dadurch gekennzeichnet, dass der Grundkörper (10) dichtend an einem Anschlussstück des Kühlers (7) anliegt.

6. Dampfdurchführungssystem nach einem der Ansprüche 1 bis 5, dadurch gekennzeichnet, dass die Dichtung (9) einen Ringkörper (11) und eine verformbare Lippe (12) aufweist.

7. Dampfdurchführungssystem nach einem der Ansprüche 1 bis 6, dadurch gekennzeichnet, dass die Dichtung (9) einen ersten Ring (13), insbesondere einen Stahlring, am äusseren Umfang des Grundkörpers (10) und/oder einen zweiten Ring (14), insbesonders einen Stahlring, innerhalb der Dichtung (9) aufweist, welche die Dichtung stabilisieren.

8. Dampfdurchführungssystem nach einem der Ansprüche 1 bis 7, dadurch gekennzeichnet, dass das Dampfdurchführungsrohr (6) am verdampferseitigen Ende (23) in einer Dichtung (15) gelagert ist, so dass die Aussenwand (31) des Dampfdurchführungsrohrs (6) dichtend an der Innenseite der Dichtung (15) anliegt.

9. Dampfdurchführungssystem nach Anspruch 8, dadurch gekennzeichnet, dass die verdampferseitige Dichtung (15) im Querschnitt V-förmig ist.

10. Dampfdurchführungssystem nach einem der Ansprüche 8 bis 9, dadurch gekennzeichnet, dass die verdampferseitige Dichtung (15) durch axiale Kräfte dichtend, und in Umfangsrichtung kraftschlüssig mit dem Anschlussstück (8) verbunden ist.

11. Dampfdurchführungssystem nach einem der Ansprüche 8 bis 10, dadurch gekennzeichnet, dass die verdampferseitige Dichtung (15) auf ihrer Aussenseite eine Kugelfläche (26) und das Anschlussstück (8) auf seiner Innenseite einen Kegelschliff (25) aufweist, wobei die Kugelfläche (26) der Dichtung (15) unter Ausbildung eines Kugelgelenkes dichtend im Kegelschliff (25) des Anschlussstückes (8) liegt.

12. Dampfdurchführungssystem nach einem der Ansprüche 8 bis 11, dadurch gekennzeichnet, dass die Dichtung (15) am verdampferseitigen Ende (23) des Dampfdurchführungsrohrs (6) aus einem inerten Kunststoff, insbesondere PTFE, besteht.

13. Dampfdurchführungssystem nach einem der Ansprüche 8 bis 12, dadurch gekennzeichnet, dass die verdampferseitige Dichtung (15) im Innern einen O-Ring (20), insbesondere aus Gummi, aufweist.

14. Dampfdurchführungssystem nach einem der Ansprüche 1 bis 13, dadurch gekennzeichnet, dass das Dampfdurchführungsrohr (6) insbesondere am verdampferseitigen Ende (23) eine Fixierung in axialer Richtung aufweist.

15. Dampfdurchführungssystem nach Anspruch 14, dadurch gekennzeichnet, dass das Dampfdurchführungsrohr (6) einen Flansch (17) aufweist, der in einer Vertiefung (18) des Antriebteils (4) einrastbar ist.

16. Rotationsverdampfer (1) mit einem drehbaren Verdampfergefäss (5) und einem stationären Kühler (7), mit einem Dampfdurchführungssystem, welches das Verdampfergefäss (5) mit dem Kühler (7) verbindet und mit einem Antriebsteil (4) zum Drehen des Verdampfergefässes (5), dadurch gekennzeichnet, dass das Dampfdurchführungssystem nach einem der Ansprüche 1 bis 15 ausgebildet ist.
